# EUROPEAN PATENT APPLICATION

(11) **EP 2 116 969 A1**
(43) Date of publication of application: **11.11.2009**
(21) Application number: 07832654.3
(22) Date of filing: 28.11.2007
(51) Int. Cl.: G06Q 30/00, G06F 17/30, H04N 7/173

(54) **ADVERTISEMENT DISTRIBUTION SYSTEM, ADVERTISEMENT DISTRIBUTION SERVER, ADVERTISEMENT DISTRIBUTION METHOD, PROGRAM, AND RECORDING MEDIUM**

(30) Priority: 28.12.2006 JP 2006355529
(71) Applicant: Sharp Kabushiki Kaisha, Osaka-shi, Osaka 545-8522 (JP)
(72) Inventor: WATANUKI, Keiko, Osaka-shi, Osaka 545-8522 (JP); HINODE, Haruo, Osaka-shi, Osaka 545-8522 (JP); NAKAZAWA, Masayuki, Osaka-shi, Osaka 545-8522 (JP); KESHI, Ikuo, Osaka-shi, Osaka 545-8522 (JP); ADACHI, Yasushi, Osaka-shi, Osaka 545-8522 (JP); AIBA, Tatsushi, Osaka-shi, Osaka 545-8522 (JP); YAMAMOTO, Tomoaki, Osaka-shi, Osaka 545-8522 (JP)
(74) Representative: Müller - Hoffmann & Partner
(86) International application number: PCT/JP2007/072932
(87) International publication number: WO 2008/081664

(57) **Abstract**

An advertisement distributing system, advertisement distributing server, and advertisement distributing method, program and recording medium are provided for encouraging the users to buy a product in such a manner that the most suitable program video scene is selected in accordance with the advertisement distributed by an advertiser, and distributed to the users with the advertisement. An advertising video searching unit of a server, based on an advertisement ID received from a first terminal device, searches through advertisement video, extracts a video ID corresponding to the advertisement ID and outputs it to a viewing history searching unit. A viewing history searching unit determines whether the video ID has been stored in viewing history that reflects user's taste, and outputs the corresponding video ID if it is found, to a content synthesizer. The content synthesizer distributes the advertisement data and video data to the first terminal device.

## Description

### Technical Field

The present invention relates to a technology for advertisement distribution suited to user's taste.

### Background Art

For instance, there would be a case that a viewer of a broadcast program, when watching a program, feels like going to the shop such as a Korean barbecue restaurant etc. that is presented in the program, but the viewer forgets it with passage of days and ends up not visiting the shop even though the viewer goes around the shop later. Such a situation is a loss for the broadcasting station that featured the shop, for the shop that was featured and also for the viewer who was interested in but missed the opportunity to go to that shop.

Conventionally, for the sake of the people who visit unknown areas, there has been a technology for getting information on shops, facilities and the like by internet search. However, this is useless if the name or place of the shop featured in the broadcast program has been forgotten or when the very fact of being featured in the broadcast has been forgotten.

In order to definitely provide information on the shop etc., featured in a broadcast program to the viewers, there has been a disclosed technology which accumulates shop information in relation with program-specifying data and presents it as appropriate (see patent document 1, for example).

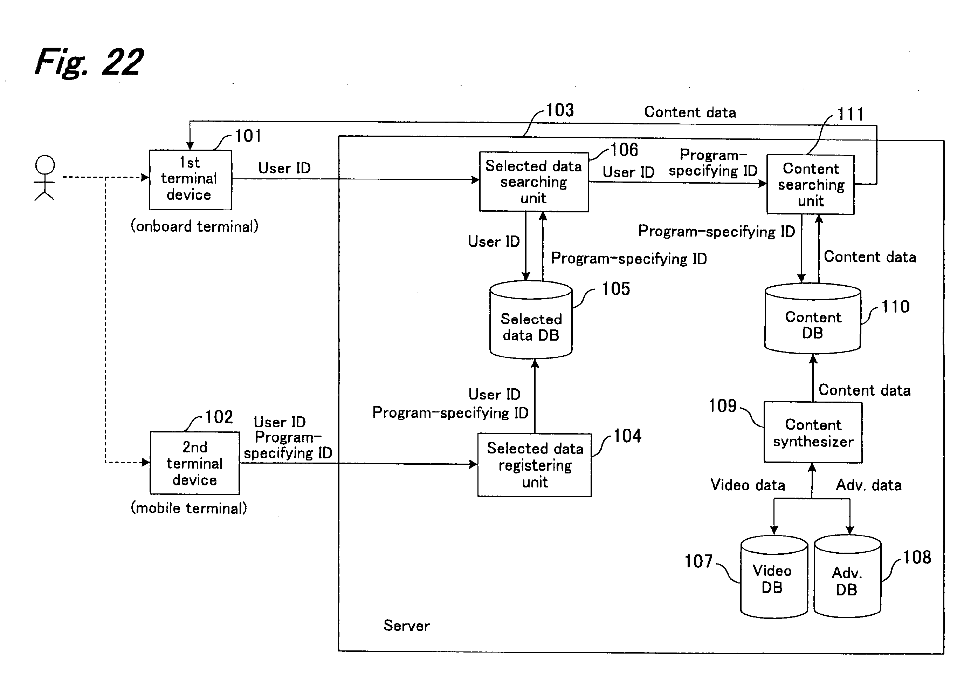

FIG.22 is a configurational diagram of a conventional system for distributing data regarding shops and the like.
This system is composed of a first terminal device 101, a second terminal device 102 and a server 103. The server 103 includes: a selected data registering unit 104 for registering program information selected by the user; a selected data DB (database) 105 for storing the data; a selected data searching unit 106 for searching data from the selected data DB; a video DB 107 for storing broadcasted video; an advertisement DB 108 for storing advertisement data; a content synthesizer 109 for producing a content by synthesizing video of video DB 107 and advertisement data of advertisement DB 108; a content DB 110 for storing the content; and a content searching unit 111 for searching a content from the content DB 110.

When the user, viewing a program, felt interested in a shop featured in the program, the user operates second terminal device 102 such as a PC (Personal Computer) or mobile phone to transmit a user ID and a program-specifying ID for specifying the program. When the server 103 receives the user ID and the program-specifying ID, the selected data
registering unit 104 registers these IDs in a related manner into selected data DB 105.

Thereafter, the user transmits the user ID to the server 103 by means of the first terminal device 101, which is an onboard terminal or the like, the selected data searching unit 106 in the server 103 searches through the selected data DB 105 to acquire the program-specifying ID based on the user ID. The content searching unit 111, which is supplied with the program-specifying ID, searches the content data linked with the program-specifying ID and transmits the content data to first terminal device 101, so that the user can obtain the information as to the shop the user was previously interested in, at the first terminal device 101.
Patent document 1:
   Japanese Patent Application Laid-open 2006-12045

### Disclosure of the Invention

### Problems to be solved by the Invention

However, since, in the data distributing system disclosed in patent document 1, only the information on the shop that was featured by the broadcast program is distributed, there is the problem that other shops that were not featured cannot use this service even if they want to distribute advertisement.

Further, when a certain shop was picked up some times in one broadcast program or when a certain shop was featured in multiple programs, and if the user has designated the same shop a multiple number of times, there occurs the problem that the conventional technique as shown in patent document 1 cannot determine which video should be selected as the best advertisement.

The present invention has been devised to solve the above problems, it is therefore an object of the invention to provide an advertisement distributing system, an advertisement distributing server, and an advertisement distributing method, program and recording medium, which can encourage the users to buy, by selecting the best program video scene in harmony with the advertisement distributed by an advertiser and distributing it with the advertisement. Means for Solving the Problems

In view of the above situation, the advertisement distributing system according to the first invention is an advertisement distributing system for distributing advertisement from a server to a terminal device, **characterized in that**
a storage is searched through based on data that specifies an advertisement so as to determine whether there is any video data corresponding to the advertisement data, and if video data corresponding to the advertisement data is found, the server distributes the advertisement data to the terminal device.

The advertisement distributing system according to the second invention is an advertisement distributing system for distributing advertisement from a server to a terminal device, **characterized in that**
a storage that reflects user' s taste is searched through based on data that identifies an advertisement so as to determine whether there is any video data corresponding to the advertisement data, and if video data corresponding to the advertisement data is found, the server distributes the advertisement data to the terminal device.

The advertisement distributing system according to the third invention is an advertisement distributing system for distributing advertisement from a server to a terminal device, **characterized in that**
a storage that reflects user' s taste is searched through based on data that identifies an advertisement so as to determine whether there is any video data corresponding to the advertisement data, and if video data corresponding to the advertisement data is found, the server distributes the advertisement data and the video data to the terminal device.

The advertisement distributing system according to the fourth invention is an advertisement distributing system for distributing advertisement from a server to a terminal device, **characterized in that**
a storage that reflects user's taste is searched through based on data that identifies a content including advertisement, and when the data that identifies the content is found in the storage, the server distributes content data to the terminal device.

The advertisement distributing server according to the fifth invention is an advertisement distributing server for distributing advertisement to a terminal device, comprising: an advertising video storage for managing pairs of advertisement data and video data; an advertising video searching portion which, based on the data identifying an advertisement received from the terminal device, searches through the advertising video storage whether there is any video data corresponding to the advertisement data, reflecting the user's viewing history; and a content synthesizer for combining the advertisement data and the video data when video data corresponding to the advertisement data is found,
**characterized in that** the advertisement data and the video data are distributed to the terminal device.

The advertisement distributing server according to the sixth invention includes an advertising video registering portion for selecting the video data suited to the advertisement data and is **characterized in that** the advertising video storage stores the advertisement ID that identifies the advertisement data and the video ID that identifies the video data in pair.

The advertisement distributing server according to the seventh invention is **characterized in that** the advertising video searching portion, based on the advertisement ID received from the terminal device, searches whether the video ID that corresponds to the advertisement ID is present in the advertising video storage, and outputs, if the corresponding video ID is found, the advertisement ID and the video ID to the content synthesizer; and the content synthesizer identifies advertisement data and video data based on the advertisement ID and the video ID.

The advertisement distributing server according to the eighth invention is **characterized in that** the advertising video registering portion compares text information contained in the advertisement data and text information contained in the video data to select the video data suited to the advertisement data.

The advertisement distributing server according to the ninth invention includes a viewing history storage for managing video IDs of video data that reflects user' s taste; and a viewing history searching portion for searching whether the video ID extracted from the advertising video storage has been stored in the viewing history storage, and is **characterized in that** when the corresponding video ID is found in the viewing history storage, the video ID and the advertisement ID corresponding to it are output to the content synthesizer.

The advertisement distributing server according to the tenth invention is **characterized in that** the advertising video storage manages a combination of a user ID, an advertisement ID reflecting user's taste and a video ID.

The advertisement distributing server according to the eleventh invention is an advertisement distributing server for distributing advertisement to a terminal device, comprising: a content storage for storing content data of advertisement data synthesized with video data; a favorite content storage for managing a combination of a user ID and a content ID that identifies the content data suited to user' s taste; a favorite content searching portion for searching whether a content ID received from the terminal device is present in the favorite content storage; and, a content distributor which acquires content data from the content storage and distributes the content data to the terminal device.

The advertisement distributing server according to the twelfth invention includes a viewing history analyzer for determining whether video data is suited to user' s taste based on the viewing behavior data of the user, and is **characterized in that** the combination of the advertisement data and the video data or selection of content data is done reflecting the determination result.

The advertisement distributing server according to the thirteenth invention is **characterized in that** when a plurality of video data are suited to the advertisement data, the video data having the greatest degree of similarity with the advertisement, the video data having the highest degree of user's liking, the video data of which the viewing time of the user or of which the program broadcast date is the latest, or the video data that agrees with the setting suited to the time when the advertisement is distributed, is selected.

The advertisement distributing method according to fourteenth invention is an advertisement distributing method for distributing advertisement from a server to a terminal device, comprising the steps of:
searching through a storage that reflects user's taste based on data that identifies an advertisement and determining whether there is any video data corresponding to the advertisement data; and, distributing the advertisement data from the server to the terminal device when video data corresponding to the advertisement data has been found.

The advertisement distributing method according to fifteenth invention is an advertisement distributing method for distributing advertisement from a server to a terminal device, comprising the steps of:
searching through a storage that reflects user's taste based on data that identifies an advertisement and determining whether there is any video data corresponding to the advertisement data; and, distributing the advertisement data and the video data from the server to the terminal device when video data corresponding to the advertisement data has been found.

The advertisement distributing method according to sixteenth invention is an advertisement distributing method for distributing advertisement from a server to a terminal device, comprising the steps of:
searching through a storage that reflects user's taste based on data that identifies a content containing advertisement; and, distributing content data from the server to the terminal device when data that identifies the content has been found in the storage.

The program according to the present invention is characterized by making a computer execute the above-described advertisement distributing method.

The recording medium of the present invention is characterized by being recorded with above-described program so as to be readable by a computer.

### Effect of the Invention

As described above, according to the present invention, based on an advertisement ID, video data corresponding to the advertisement ID is extracted, and the server distributes the video data to the terminal device, so that the user will see the advertisement together with the video, whereby it is possible to encourage the user to buy.

Further, based on a content ID in advertisement-contained content, the storage that manages content IDs suited to user's taste is searched through. If the corresponding content ID is found, the server distributes the content data so that the user will see the content data suited to user's taste, whereby it is possible to encourage the user to buy.

It is also possible to distribute advertisement for shops, products, etc, that have not been featured in broadcast programs etc., by selecting and synthesizing video data suited to advertisement data, as appropriate.

Since the video data combined with advertisement data is one that was determined to have been viewed with interest by the user by measuring the user's viewing behavior, the user is expected to positively watch the video containing advertisement, hence it is possible to enhance the effect of advertisement.

Further, it is possible to enhance the effect of advertisement by selecting corresponding video data when content data is distributed.

### Brief Description of Drawings

FIG.1 is a diagram showing the concept of an advertisement distributing system in the present invention.
FIG.2 is a diagram showing a system configuration of the advertisement distributing system in the first embodiment of the present invention.
FIG.3 is one example of a block configurational diagram of a first terminal device in the present invention.
FIG.4 is a flow chart diagram showing the sequence of an advertisement distributing process in a server of the first embodiment of the present invention.
FIG.5 is a chart showing a table example of an advertising video DB.
FIG.6 is a chart showing a table example of a viewing history DB.
FIG.7 is a chart showing a table example an advertisement DB.
FIG.8 is a chart showing a table example a video DB.
FIG.9 is a diagram showing one example of a display screen of the first terminal device.
FIG.10 is one example of an advertisement format with video in the first terminal device.
FIG.11 is a flow chart diagram showing the sequence of an advertising video registering process.
FIG. 12 is a flow chart showing the sequence of a viewing history analyzing process.
FIG.13 is a diagram showing a system configuration of the advertisement distributing system in the second embodiment of the present invention.
FIG.14 is a flow chart diagram showing the sequence of the advertisement distributing process in a server of the second embodiment of the present invention.
FIG.15 is a chart showing a table example of an advertising viewing video DB.
FIG.16 is a flow chart diagram showing the sequence of an advertising viewing video registering process.
FIG.17 is a diagram showing a system configuration of the advertisement distributing system in the third embodiment of the present invention.
FIG.18 is a chart showing a table example of a content DB.
FIG.19 is a flow chart diagram showing the sequence of the advertisement distributing process in a server of the third embodiment of the present invention.
FIG.20 is a chart showing a table example of a favorite content DB.
FIG.21 is a flow chart diagram showing the sequence of registering data into a favorite content DB.
FIG.22 is a diagram showing a system configuration of a conventional system for distributing data regarding shops etc.

### Description of Reference Numerals

- 1: First terminal device
- 2: Second terminal device
- 3, 14, 40, 50, 56: Server
- 4: Viewing history analyzer
- 5: Viewing history DB
- 6: Advertisement DB
- 7: Video DB
- 8: Content synthesizer
- 9: Advertising video DB
- 10: Registering unit
- 11: Controller
- 12, 58: Shop information DB
- 13, 57: Shop information searching unit
- 15: Advertising video searching unit
- 16, 44: Viewing history searching unit
- 17: Advertising video registering unit
- 18: Communicator
- 19: Input unit
- 20: Display unit
- 21: Memory
- 22: Positional information acquisitor
- 23: Controller
- 24, 27: Advertisement display area
- 25, 28: Video display area
- 26: Key
- 29, 45: Advertisement text analyzer
- 30, 46,: 60Video text analyzer
- 31, 47,: 61Similarity analyzer
- 41: Advertising viewing video searching unit
- 42: Advertising viewing video DB
- 43: Advertising viewing video registering unit
- 51: Favorite content searching unit
- 52: Favorite content DB
- 53: Content registering unit
- 54: Content DB
- 55: Content distributor
- 59: Content text analyzer

### Best Mode for Carrying Out the Invention

The embodied modes of the present invention will hereinbelow be described with reference to the drawings. In the description below, the same components are allotted with like reference numerals. These have the same titles and functions. Accordingly, detailed description will not be repeated for those.

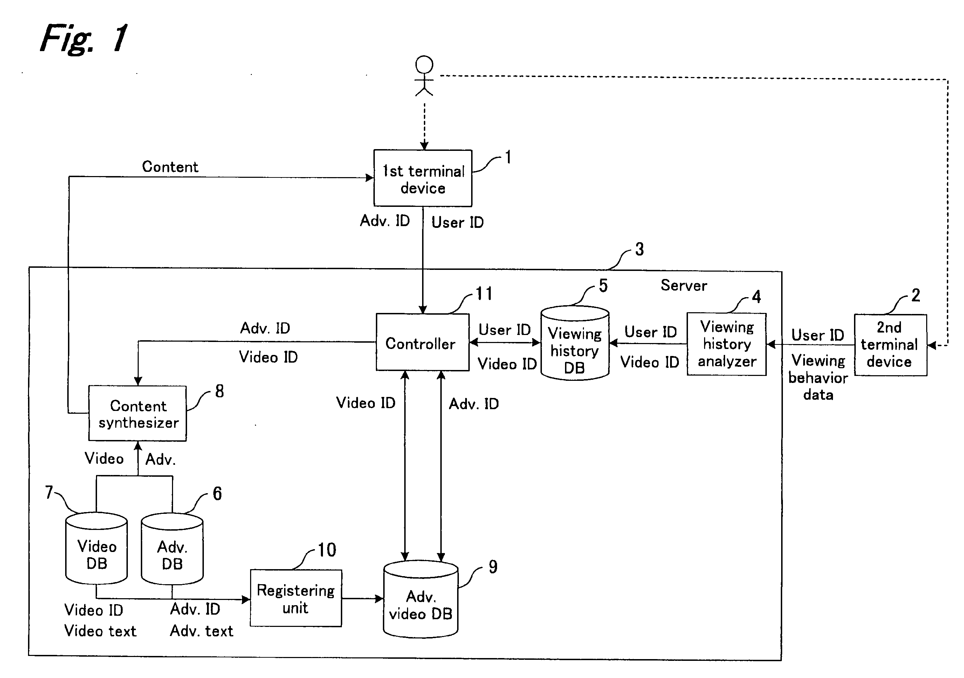

FIG.1 is a diagram showing the concept of an advertisement distributing system in the present invention.
As shown in FIG.1, this system includes a first terminal device 1, a second terminal device 2 and a server 3. The server 3 includes: a viewing history analyzer 4 for analyzing user's taste; a viewing history DB 5 for accumulating data as to taste; an advertisement DB 6 for accumulating advertisements of shops and products, a video DB 7 for accumulating videos; a content synthesizer 8 for synthesizing a content based on the video data in video DB 7 and advertisement data in the advertisement DB 6; a registering unit 10 for registering combinations of advertisement and video into an advertising video DB 9; and a controller 11 for controlling each component of the server 3.

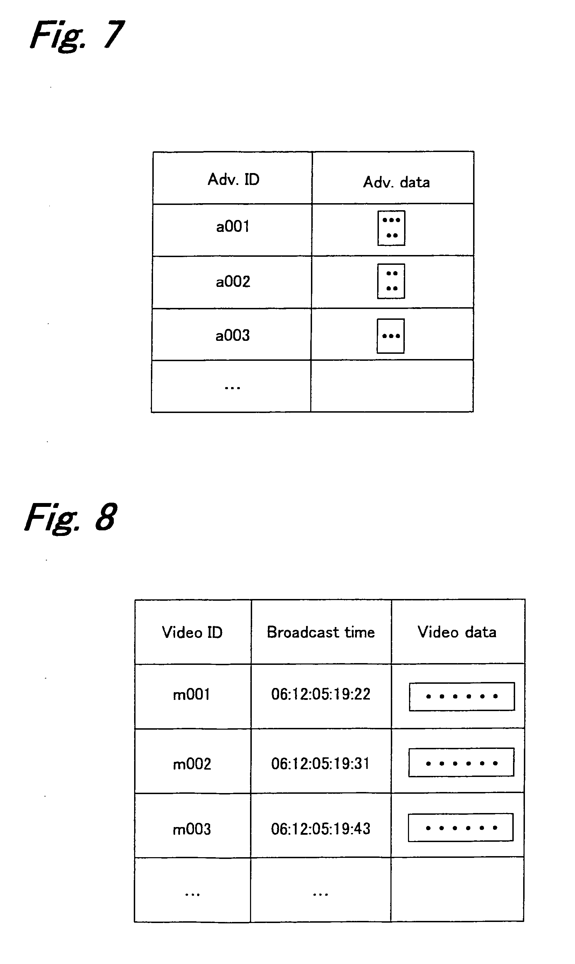

Here, the advertisement DB 6 is a DB that has downloaded advertisement data of shops and products and accumulated them therein, and has advertisement IDs and advertisement data accumulated as shown in FIG. 7. Here, the advertisement data shouldbe understoodto include texts and images, ormay include a movie.

On the other hand, the video DB 7 is a DB that has accumulated video data provided by, for example broadcasting stations and content providers, and includes video IDs, broadcast time and video data, as shown in FIG.8. The video data may include subtitles, EPG information, on-screen titles, descriptive text, metadata, voice recognition result of words and the like. In the video DB 7, each piece of video data is a scene that is cut out for a topic, and is accumulated with a video ID allotted for each scene. As the techniques for dividing a video (movie) into scenes, deciding a break based on video featuring quantities such as color information, motion information etc., deciding an end of a topic using language information such as on-screen titles, subtitles, voice recognition result of words and the like, deciding the break using audio information such as a start, end and/or the like of music, and deciding the break using a process of integrating these pieces of information, have been known.

Further, the above DBs and the like are to be accumulated on a HDR (Hard Disc Recorder), for example. As the aforementioned server, a home media server or the like can be considered. In the case of the media server, the contents in the advertisement DB or the like need to be updated based on external servers.

Further, the above server function does not need to reside in a single server, but can be realized by liking home PCs, peripherals, AV devices and other devices that are connected by a network. This can be done using UPnP (Universal Plug and Play) AV technology realized on the basis of the standardized technology of the internet.

Alternatively, the above server function may be realized by the external servers, instead of the media server. In the case of using external servers, it is not necessary to realize the function with a single server but the function can be scattered over a plurality of servers.

The second terminal device 2 observes the behavior of the user who is watching the video that is being broadcasted on a player (not shown). The second terminal device 2 transmits the observation result as the viewing behavior data with the user ID to the viewing history analyzer 4. At the same time, the player transmits the ID of the video that is being broadcast to the viewing history analyzer 4.

The viewing history analyzer 4 analyzes the received viewing behavior data, and if it is determined that the user is interested in the video, the analyzer outputs the video ID received from the player and the user ID to viewing history DB 5.

On the other hand, the first terminal device 1 receives a suited advertisement ID based on the current positional information of the user, and the first terminal device 1 transmits the advertisement ID and user ID to the server 3.

The controller 11 of server 3 which has received the user ID and advertisement ID from the first terminal device 1 acquires a video ID that is paired with the advertisement ID, from the advertising video DB 9. Then, the controller 11 searches whether the video ID has been accumulated in the viewing history DB 5. If the video ID is not accumulated in the viewing history DB 5, the advertisement is regarded as being not suited to user's taste and the process is ended. If the video ID has been accumulated in the viewing history DB 5, the controller 11 outputs the advertisement ID and video ID to a content synthesizer 8.

The content synthesizer 8 acquires advertisement data and video data from the advertisement DB 6 and the video DB 7, based on the input advertisement ID and video ID, and combines the advertisement data and video data or synthesizes these to produce a content and transmits the content to the first terminal device 1.

The first terminal device 1, which has received the content, plays the content so that the user views the video attached with advertisement.

In this way, the present invention is constructed such that an advertisement to be distributed in accordance with the user's positional information is distributed with a video suited to user's taste. That is, the video attached to an advertisement can be selected based on the user's viewing history so as to enhance the effect of advertisement.

### [The first embodiment]

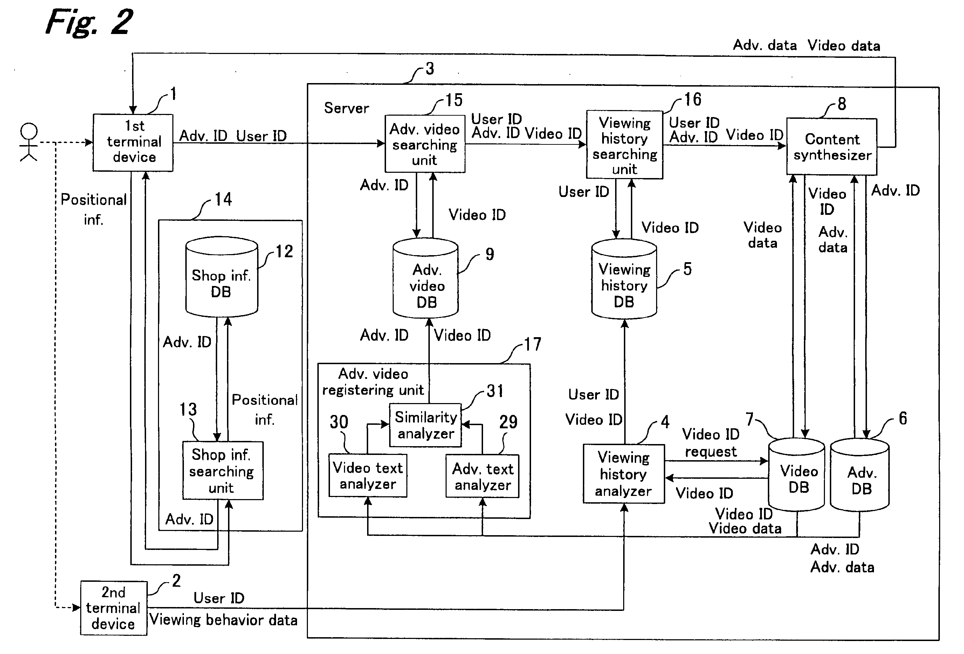

FIG.2 is a diagram showing a system configuration in the first embodiment of the present invention.
This system is composed of the first terminal device 1, the second terminal device 2 and the server 3, being connected through a network. This network may be either wired or wireless. The first terminal device 1 is, for example a mobile terminal or the like. The second terminal device 2 is a device for sensing the viewing behavior of the user. Examples include a sensor for detecting user's remote control operation, a camera for detecting the orientation of the user face or user' s line of slight, sensors for body temperature, heartbeat, etc. for detecting if the user is viewing with interest. Other than these, as a player (or receiver) (not shown), for example a television etc. is connected to the network.

Also, as shown in the above conceptual view, the server function does not need to be realized by a single server, but can be realized by a plurality of processing functions and DB functions connected by network. Further, the server may be one that is installed within the home such as a media server, or may be an external server. When the server is of a home use, it is necessary to update advertisement data from external servers.

Alternatively, the function may be partially within the home and partially in the external servers. The configuration described hereinbelow with reference to FIG. 2 is one form, and as long as these processing functions and DB functions are provided, it does not matter that these functions are either within or beyond the home or constructed of one device or multiple devices.
Further, part of the server function in FIG.2 may also be present in the first terminal device.

When the first terminal device 1 is a mobile phone, it has a wireless communication function and an information input/output function, and is connected to network by way of an unillustrated mobile phone base station.

Further, other than the server 3, there is a server 14 including a shop information searching unit 13 that searches through a shop information DB 12 based on the data received from the first terminal device 1 and transmits the search result to the first terminal device 1. The function of this server 14 may be provided in the server 3. A shop information DB 12, of course, includes product information too.

The server 3 includes an advertising video searching unit 15 that searches through the advertising video DB 9 based on the search result data received from the first terminal device 1 to output data; a viewing history searching unit 16 for obtaining the output from the advertising video searching unit 15 to compare it with data of the viewing history DB 5; a content synthesizer 8 that obtains the output from the viewing history searching unit 16 to combine or synthesize data from the video DB 7 and from the advertisement DB 6; an advertising video registering unit 17 that registers data to the advertising video DB 9; and the viewing history analyzer 4 for analyzing the viewing behavior data from the second terminal device 2 to register into the viewing history DB 5.

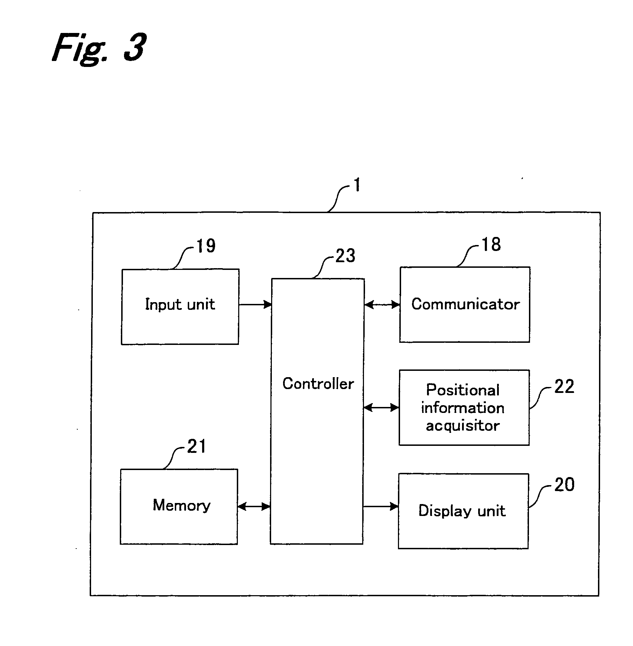

FIG. 3 is one example of a block configurational diagram of the first terminal device (e.g., mobile terminal) 1 in the present invention. The first terminal device 1 is comprised of a communicator 18 that makes communication with the server 3; an input unit 19 for receiving user operations; a display unit 20; a memory 21; a positional information acquisitor 22 for performing a process of acquiring the positional information of the first terminal device 1; and a controller 23 for controlling each of these components.

In the system of the present embodiment constructed as above, the sequence for distributing advertisement and video to the first terminal device 1 will be described.

To begin with, the user operates keys in the first terminal device 1, e.g., a mobile terminal etc., to input for selection of a shop search menu through the input unit 19. The controller 23 of the first terminal device 1 transmits a control signal for acquisition of the position to the positional information acquisitor 22. Positional information acquisitor 22 acquires the positional information of the first terminal device 1 from the GPS (Global Positioning System) etc., via the controller 23 and the communicator 18.

Alternatively, the first terminal device 1 may periodically acquire positional information and automatically display the menu for acquiring shop information on the standby screen of the first mobile terminal device 1.

Further, the controller 23 acquires the user ID from the memory 21 and sends an advertisement ID acquisition request together with the acquired positional information by the positional information acquisitor 22 to the server 14 through the communicator 18.

The shop information searching unit 13 of the server 14 that has received the user ID and the positional information from the first terminal device 1, searches through the shop information DB 12 based on the positional information. In the shop information DB 12, positional information and advertisement IDs are stored in a related manner. That is, in accordance with the position of first terminal device 1, advertisement IDs for advertising shops and products located therearound are stored in the related manner. The shop information searching unit 13 searches through the shop information DB 12 based on the positional information to acquire advertisement IDs and transmits them to the first terminal device 1.

Herein, advertisement IDs are assumed to be acquired based on the positional information of the first terminal device 1, but advertisement IDs may be acquired based on the RFID (Radio Frequency Identification) tags and the like, attached to shops, products, etc., by a mobile terminal or the like.

It is also possible to make the first terminal device 1 automatically receive advertisement IDs for advertising shops and products from the shops and products located therearound in accordance with the position of the user.

The controller 23 of the first terminal device 1 having received the advertisement ID from the server 14 through the communicator 18, transmits a content data acquisition request with the user ID and advertisement ID to the server 3.

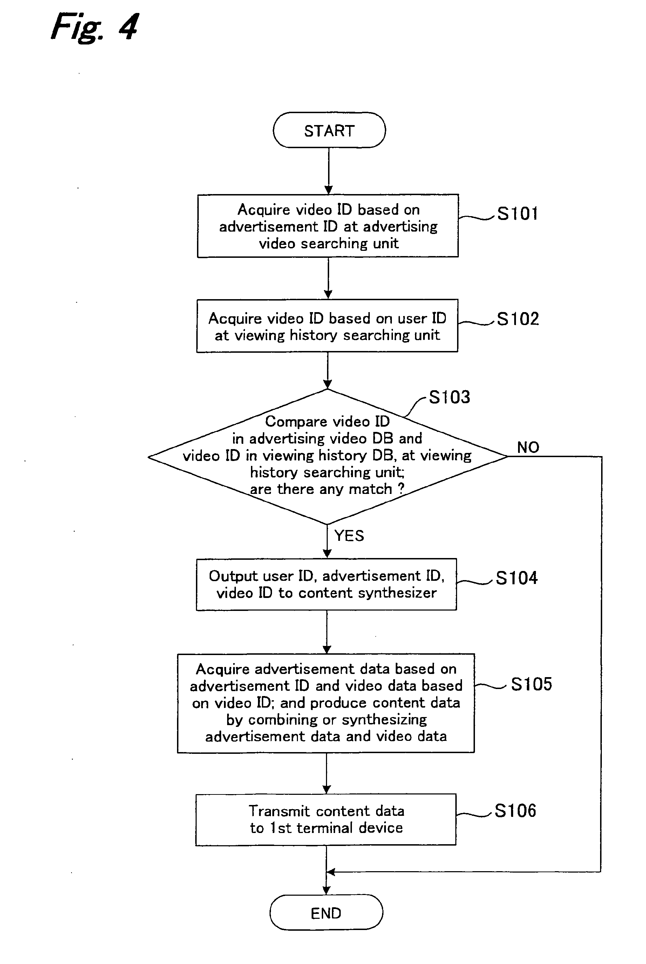

FIG.4 is a flow chart diagram showing the sequence of an advertisement distributing process in the server 3.
In the server 3 that has received a content data acquisition request including the user ID and advertisement ID from the first terminal device 1, the advertisement ID and user ID are input to the advertising video searching unit 15. The advertising video searching process in the advertising video searching unit 15 is a process which, based on the advertisement ID the user has received by means of the first terminal device 1, searches video suited to the content of the advertisement. In the advertising video DB 9, advertisement IDs and videos are accumulated in pairs.

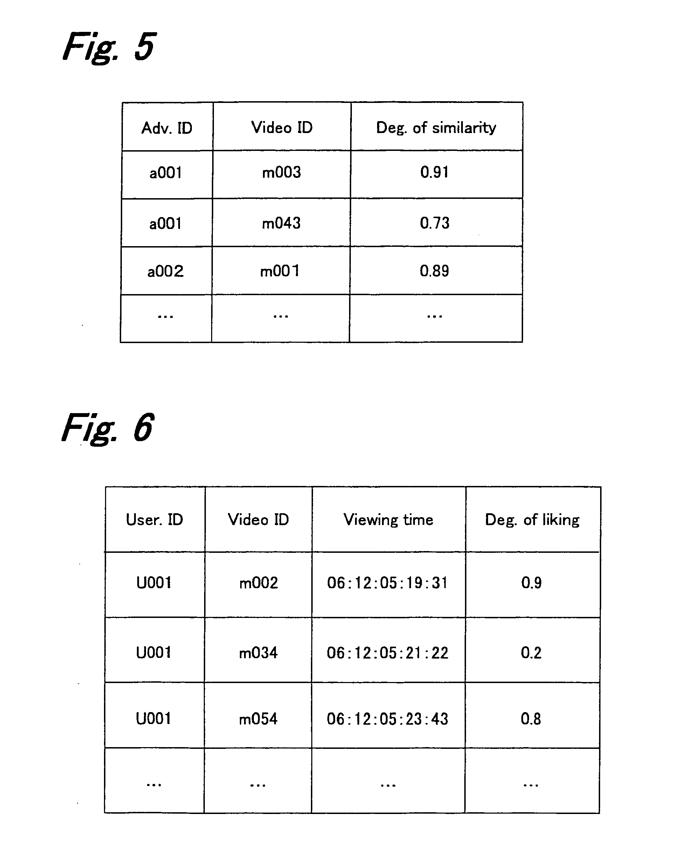

FIG.5 is a chart showing a table example of the advertising video DB 9.
The video ID selected by the advertising video registering unit 17 is accumulated in the advertising video DB 9 in a pair with its advertisement ID. Here, in the advertising video DB 9, an advertisement ID is accumulated in combination with all the video IDs suited to it. Further, the degree of similarity of each video with an advertisement may be calculated and recorded as shown in FIG.5.
The process of the advertising video registering unit 17 to record video IDs and the degrees of similarity into advertising video DB 9 will be described later.

First, at S101 in FIG.4, the advertising video searching unit 15, based on an advertisement ID, searches through the advertising video DB 9 and acquires a video ID and outputs the user ID, the advertisement ID, the video ID to the viewing history searching unit 16.

Here, the user may receive a plurality of advertisement IDs at the same position. In this case, a search may be done based on all the received advertisement IDs or the best-suited advertisement may be selected or advertisements may be classified in the order of priority, taking into account the time etc. (morning, day, night, weekday, weekend, season, etc.) when the advertisement is distributed. For example, though not shown in FIG.5, it is possible to provide such a configuration that advertisement text has been also recorded in advance in the advertising video DB 9, and if the time zone when advertisement IDs are received is lunchtime, food service-related advertisements alone may be selected or food service-related advertisements may be given priority by performing keyword extraction or the like, from the advertisement text.

Further, in the present process, there is a possibility that a plurality of video IDs are found for a single video ID. In this case, the multiple video IDs may be sent to the viewing history searching unit 16 or the video ID that has the highest degree of similarity with the advertisement based on the degree of similarity shown in FIG.5 may be sent.

Next, at S102, the viewing history searching unit 16 which has received the user ID, advertisement ID and video ID, searches through the viewing history DB 5. The viewing history searching process of the viewing history searching unit 16 is a process of determining whether the video ID sent from the advertising video searching unit 15 is contained in viewing history DB 5 of the user, or whether the video ID is suited to user's taste.

In the viewing history DB 5, the user ID and video IDs of videos the user has viewed with interest have been accumulated, and the viewing history searching unit 16 acquires a video ID from the viewing history DB 5 based on the user ID.

FIG. 6 is a chart showing a table example of the viewing history DB 5.
The viewing history DB 5 accumulates the user ID and IDs of the videos that have been extracted as video scenes the user was interested in, by the viewing history analyzer 4.

The viewing history searching unit 16, based on the user ID, searches through the viewing history DB 5 to extract video IDs related to the user ID.

At S103, whether there is any ID among these extracted video IDs, which corresponds to the video ID input from the advertising video searching unit 15, is examined.

As a result of comparing the video ID input from the advertising video searching unit 15 with the video IDs in the viewing history DB 5, there is no relevant ID ('NO' at S103), the advertisement is regarded to be other than user's taste, and the content distributing process is ended while a notice that indicates that there is no relevant advertisement information is transmitted to the first terminal device 1.

As a result of comparing the video ID input from the advertising video searching unit 15 with the video IDs in viewing history DB 5, there is a corresponding ID ('Yes' at S103), the advertisement is regarded to be suited to user's taste, and the video ID is output with the user ID and advertisement ID to the content synthesizer 8 at S104.

By the way, in the above viewing history searching process, a plurality of video IDs may be searched. In this case, the candidates are narrowed down to one by performing any one of the following processes, so that the selected one is output to the content synthesizer 8.

1) Select the one of which the user's degree of liking is highest.
That is, as shown in FIG.6, the degree of liking was previously calculated for each video ID by the viewing history analyzer 4 and has been recorded in the viewing history DB 5, and based on this, the video ID having the highest degree of liking is selected. Calculation of the degree of liking by the viewing history analyzer 4 will be described later.

2) Select the one which was viewed latest by the user.
That is, as shown in FIG. 6, the time when video was viewed has been recorded for each video ID, and based on this, the video ID of the latest time is selected.

3) Select the one of which the degree of freshness as to the date and time of broadcast of the program is high.
That is, based on the broadcast time etc. in video DB 7, the video ID having the latest time is selected.

Next, content synthesizer 8 which has obtained the user ID, advertisement ID and video ID from the viewing history searching unit 16, performs a content synthesizing process at S105.

The content synthesizing process is a process, which based on the advertisement ID and video ID, searches advertisement data and video data through the advertisement DB 6 and the video DB 7, respectively and combines the advertisement data and video data or synthesizes the data as a video-attached advertisement.

First, the content synthesizer 8 searches the advertisement data and the video data having the related advertisement ID and video ID through the advertisement DB 6 and the video DB 7 and produces a video-attached advertisement. Alternatively, the content synthesizer 8 may be adapted to temporarily store the data obtained from the search, instead of synthesizing the advertisement data and video data.

Next, at S106, the content synthesizer 8 transmits the synthesized content data or the advertisement data and video data that have not been synthesized, to the first terminal device 1 so as to end the content distributing process in the server 3.

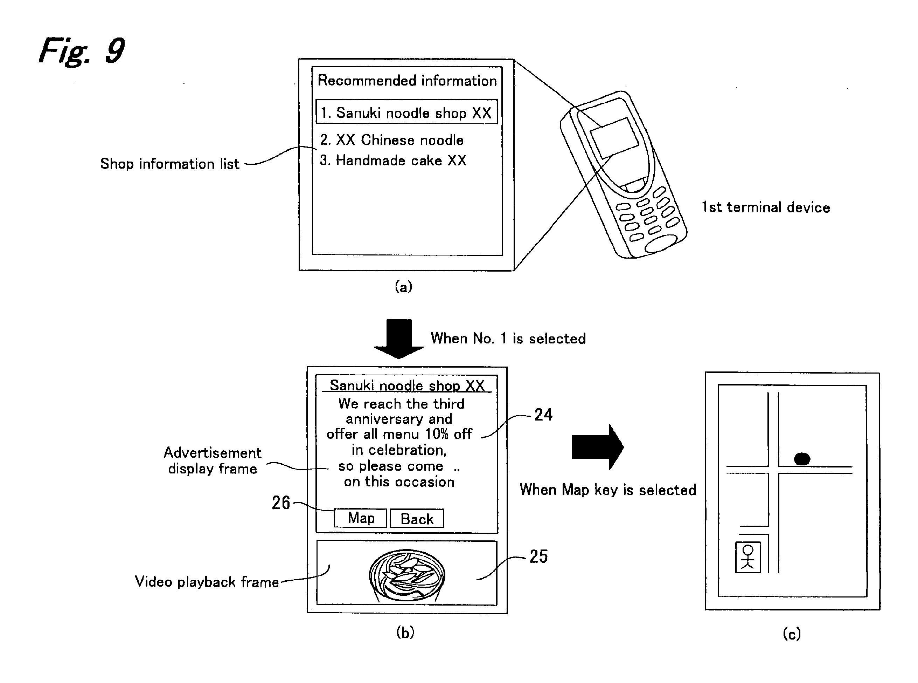

The controller 23 of the first terminal device 1 that has received the content from the server 3 via the communicator 18, gives out a reception notifying signal (e.g., a beep, vibration, etc.) and displays the advertisement 24 and the video 25 on the screen of the first terminal device 1, as shown in FIG. 9B. Here, the video data may be repeatedly played while the user is looking at advertisement.

Alternatively, first, as shown in FIG. 9A, the display unit 20 displays a title statement of advertisement information (text sentence) (FIG.9A shows an example where three sets of content data are received and their titles are displayed), and in FIG.9A, if there is any advertisement information the user wants to check, the number may be selected (in the example shown in FIG.9A, No.1 is selected) so that the found the advertisement 24 and the video 25 will be displayed as shown in FIG. 9B. In this case, advertisement data and video data may be distributed at the same time at the stage in which display of FIG.9A is made. Alternatively, advertisement data for displaying the frame of FIG.9A may be sent first, then video data may be sent at the stage when the image shown in FIG.9B is displayed.

Other the above, for example, a map key 2 6, for instance is prepared on the screen as shown in FIG.9B, so that when this is selected, the map for locating the advertiser (shop) from the user's current position may be displayed as shown in FIG.9C. Here, the order of display and the like should not be limited to this.

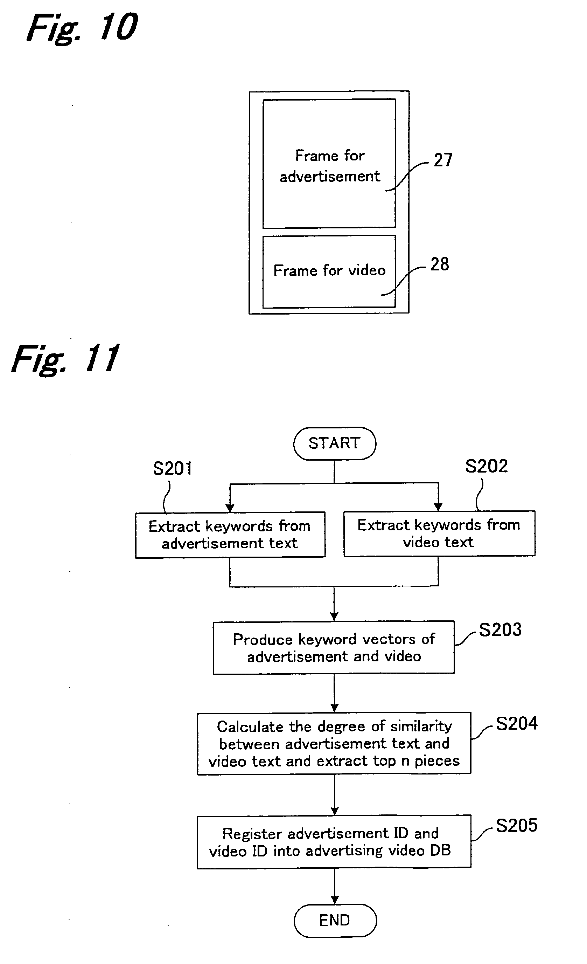

Now, the display screen will be explained. In the display unit 20, a video-attached advertisement format is previously prepared. The controller 23 outputs the content data received from the server 3 on the display unit 20. Then, as shown in FIG.10, the display screen of the first terminal device 1 is divided into, for example two areas, one area 27 for displaying advertisement data and the other area 28 for displaying (playing) the video data searched from the video DB 7. In FIG.10, an advertisement is displayed at the top, and a video is displayed at the bottom. But this is a mere example, so the display method is not limited to this. Advertisement data alone may be displayed without displaying video data. Also in this case, the present system can distribute advertisement suited to user' s taste based on the viewing history of the user.

As described heretofore, based on the advertisement ID received from the terminal device, a video ID corresponding to the advertisement ID is extracted, and when the video ID is suited to user' s taste, the video data with the advertisement data is distributed to the terminal device, so that the user will see the advertisement together with the video that reflects user's taste, whereby it is possible to encourage the user to buy.

Further, it is possible to enhance the effect of advertisement by selecting corresponding video data when content data is distributed.

### (Advertising video registering process)

The process performed by the advertising video registering unit 17 to register an advertisement ID and video ID into the advertising video DB 9 will be described in detail.

In the advertising video registering unit 17, the degree of similarity of advertisement text contained in each advertisement data with the text [subtitles, on-screen titles, EPG (Electronic Program Guide) information, descriptive text, metadata, voice recognition result of words and the like] is calculated so as to select video that is suited to the advertisement. The ID of the selected video is sent to the advertising video DB 9.

As shown in FIG.2, the advertising video registering unit 17 includes an advertisement text analyzer 29 for analyzing data from the advertisement DB 6, a video text analyzer 30 for analyzing data from the video DB 7 and a similarity analyzer 31 for analyzing the degree of similarity between the advertisement text and video text.

Detail of the process of selecting video suited to advertisement will be described hereinbelow.
In order to find video suited to an advertisement, the subj ect case is **characterized in that** the text of advertisement and the text of video are compared so as to determine similarity (perform matching).

As to similarity search for documents, the vector space model has been well known. The vector space model is to calculate similarity between documents by mapping each document onto a point in the n-dimensional vector space and determining the magnitude of the distance between the points. All the vectors are normalized to be one, and the degree of similarity can be calculated as the cosine, inner product, Euclidean distance between vectors, or the like.

As a typical technique for representing a document in vector representation, there is a method which uses a word appearing in documents as an axis of the vector space and the statistical information (TFIDF, Term Frequency Inverse Document Frequency) obtained from the frequency of appearance of the word as the value of the axis component. TFIDF is a method for estimating the importance of a keyword by determining the frequency of appearance of the keyword (TF) in the document in consideration of the importance of appearance of the keyword (IDF) in the whole collection of documents. That is, the importance of a keyword in a document is determined based on the frequency of appearance of the keyword, and in order to determine the importance of the keyword in the whole collection of documents, the inverse of the number of documents that include the keyword is used for comparison,

As another technique for representing a document in vector representation, there is a method in which a feature space is defined by n keywords, and a context vector (conceptual vector) that is related to the keywords is used for each word ("Associative retrieval from a large-scale document database" (Singakukai Shingaku Technical Report A192-99 (1993-1)). In this technique, each word contained video text is converted based on a word dictionary into a vector in the n-dimensional vector space that is related with n number of keywords, and the vector sum of words weighted using the aforementioned IDF as the weight of each word is normalized. Similarly, each word contained in advertisement text is converted based on the word dictionary into a vector in the n-dimensional vector space and the vector sum of these words is normalized. Then, the inner product between these two vectors or the like is calculated to determine the degree of similarity between the video text and the advertisement text.

FIG.11 is a flow chart diagram showing one exemplary sequence of a comparison process. Description will be made following the flow chart.
First, at S201, the advertisement text analyzer 29 cuts out sentence (text information) part from advertisement data in the advertisement DB 6, and analyzes the cut-out text so as to extract words that satisfy the predetermined condition under which each advertisement text is characterized. That is, the advertisement text prepared by advertising agencies, retailers, etc., stored in the advertisement DB 6 is morphologically analyzed so as to extract nouns, adjectives, verbs and other independent words. Morphological analysis is to divide a sentence written in a natural language into morphological elements (the smallest unit of language having a meaning) so as to make them suitable for computer processing.

On the other hand, at S202, the video text analyzer 30 extracts text contained in the video data in the video DB 7 and analyzes the extracted text to extract words that satisfy the predetermined condition characterizing each video text. That is, the EPG information, on-screen titles, subtitles, descriptive text, metadata and voice recognition result of words, attached to the videos presented by broadcasting stations and computer providers, and accumulated in the video DB 7, are morphologically analyzed so as to extract nouns, adjectives, verbs and other independent words.

Next, at S203, the advertisement text analyzer 29 and the video text analyzer 30, using the words (keywords) extracted at S201 and S202, express the advertisement text and video text, respectively in keyword vector representation by the method described above.

Further, at S204, the similarity analyzer 31, using the keyword vectors generated as above, calculates the correlation value (cosine, inner product, or Euclidean distance, between vectors, or the like may be used) between the vectorized advertisement text and video text, to thereby estimate the degree of similarity between the advertisement text and the video text, and extracts top 'n' pieces of video text having a degree of similarity with the advertisement text, equal to or greater than a certain threshold.

At S205, the advertisement ID and the extracted video IDs (top n) are accumulated with their similarity information into the advertising video DB 9. When there are a plurality of videos that match one advertisement ID, plural video IDs are paired with the single advertisement ID and registered in the advertising video DB 9. Referring to the table example of the advertising video DB 9 in FIG.5, video IDs 'm003' and 'm043' are each paired and registered with advertisement ID 'a001'.

Video data suited to advertisement data is selected as appropriate and synthesized by the above process, whereby it is possible to distribute video-attached advertisement for the shops, products and others which have not been featured in broadcast programs and the like.

### (Viewing history analyzing process)

The process performed by the viewing history analyzer 4 to register user IDs and video IDs into the viewing history DB 5 will be described in detail.

The viewing history analyzer 4, based on the viewing behavior of the user that has been detected by the second terminal device 2, extracts videos the user was interested in. The viewing history analyzer 4 accumulates the video ID into the viewing history DB 5. At this time, the degree of liking of the user may also be calculated.

Next, detail of the viewing history analyzing process will be described.

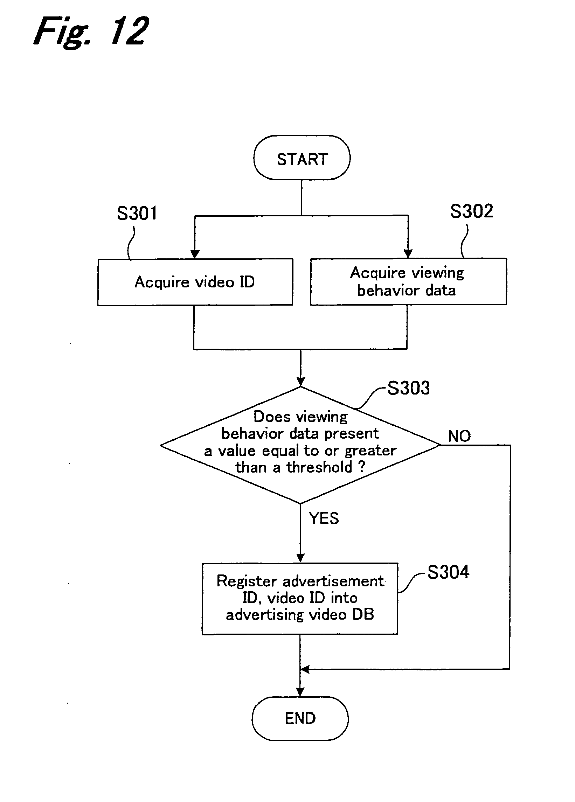

FIG. 12 is a flow chart showing the sequence of the viewing history analyzing process. Description will be made following the flow chart.

First, at S301, if video is acquired from a television receiver, the video ID and video data are transmitted to the video DB 7 while the video is on air. When a player is used instead of a television receiver, the video ID of the video that is currently being played can be known in the video DB 7, so that no task in the player is needed. When the second terminal device 2 has detected the user watching a video, the viewing history analyzer 4 acquires the ID of the video being viewed from the video DB 7. At the same time, at S302, the data on the user's viewing behavior during that time is obtained from the second terminal device 2. The user' s viewing behavior may include, for example, the remote control operation by the user who is watching the program video, or the degree of user's attention on the video and the like. When the degree of liking is evaluated based on the remote control operation, the operation history of the remote control is analyzed to measure the viewing time, for example.
Alternatively, when the degree of liking is evaluated based on the degree of user' s attention on the video, it is possible to make an estimate by detecting the orientation of the user face and/or user's line of slight using a camera or the like, or measuring user's body temperature, heartbeat etc. with sensors. Or, the degree of liking may be weighed depending on the order in which videos are viewed. For example, when videos of the same genre are continuously viewed, the degree of liking of the videos of the genre may be increased.

Next, at S303, the viewing history analyzer 4 is set with a certain threshold for the degree of liking that has been evaluated based on the user's viewing behavior, and checks whether the degree of liking is equal to or greater than the set threshold to thereby determine whether the user is viewing with interest at the present moment. If it is determined that the user has no interest ('NO' at S303), the viewing history analyzer 4 ends this process. If it is determined that the userhas interest ('YES' at S303), the viewing history analyzer 4 outputs the video ID together with the user ID to the viewing history DB 5. In the case when the user is watching the video and doing other things at the same time, the ID of the video, which the user is notmuch interested in, will not be accumulated in the viewing history DB 5. In this case, the time at which the user views the video and the user's degree of liking may be output to the viewing history DB 5. A table example of the viewing history DB 5 including these is shown in FIG.6.

Since the video data combined with advertisement data is the video data that was determined to have been viewed with interest by the user by measuring the user's viewing behavior, the user is expected to watch the content data positively, hence it is possible to enhance the effect of advertisement.

Next, the processes when new data is registered into, and when data is deleted from, the advertisement DB 6 and video DB 7, will be described.

### (The process when new advertisement data was recorded into the advertisement DB 6)

In this system, new advertisement data is recorded on demand or periodically into the advertisement DB 6, and the advertisement text is analyzed at the advertising video registering unit 17 every time the data is recorded or periodically, and video that is suited to advertisement is selected, and the ID of the video is registered together with the advertisement ID into the advertising video DB 9.

Though not illustrated, the keyword vectors of video text and keyword vectors of advertisement text, produced at the advertising video registering unit 17 in FIG.2, may be arranged so as to be recorded into the video DB 7 and the advertisement DB 6, respectively. With this arrangement, there is no longer necessary to produce vectors of video text at the advertising video registering unit 17 whenever new advertisement data is recorded, hence it is possible to shorten the processing time.

### (The process when new video data was recorded into the video DB 7)

In this system, new video data is recorded on demand or periodically into the video DB 7. The process at the advertising video registering unit 17 at that time can be achieved by two ways.

1) When new video data is recorded, the above-described advertising video registering process is carried out in the advertising video registering unit 17, up to S203 where keyword vectors of the video text are prepared. That is, no matching of the new video data with the advertisement data that has been already stored in the advertisement DB 6 before it is recorded is done. Accordingly, the new video data will not be used for the advertisement data that has been recorded in the advertisement DB 6 before it is recorded.

2) When new video data is recorded, the above-described advertising video registering process is entirely carried out in the advertising video registering unit 17. That is, text matching of the new data with the whole advertisement data that has been already accumulated is performed to update the advertising video DB 9. In this case, the new video data can be used for the advertisement data that has been recorded in advertisement DB 6 before it is recorded. Here, this process may be done either when the video ID is recorded in the video DB 7 or periodically. Also, as already stated, if keyword vectors of the video text and keyword vectors of advertisement text, produced in the advertising video registering unit 17 in FIG. 2 are arranged to be recorded into the video DB 7 and the advertisement DB 6, respectively, it is possible to shorten the processing time at the advertising video registering unit 17.

### (The process when advertisement data was deleted)

It is possible that advertisement data is deleted because of passage of time, because of expiration of the contract with the sponsor, or because of any other reason. In this system, if existing advertisement data is deleted from the advertisement DB 6, the advertising video registering unit 17 deletes the corresponding advertisement ID from the advertising video DB 9 together with the video ID. As a result, the advertisement ID will not be searched by the advertising video searching unit 15, hence this advertisement will not be distributed to the user.

Here, data in the advertising video DB 9 is a general-purpose DB for everybody as described heretofore. Accordingly, in FIG.2, for example, the video DB 7, the advertisement DB 6, the advertising video registering unit 17 and the advertising video DB 9, instead of being provided in the home server, may be provided in the service provider side server that is connected to the subject server via communication line while the viewing history analyzer 4, the viewing history DB 5 and the viewing history searching unit 16 that deal with personalized data as well as the advertising video searching unit 15 and content synthesizer 8 may be provided for the home server 3.

### [The second embodiment]

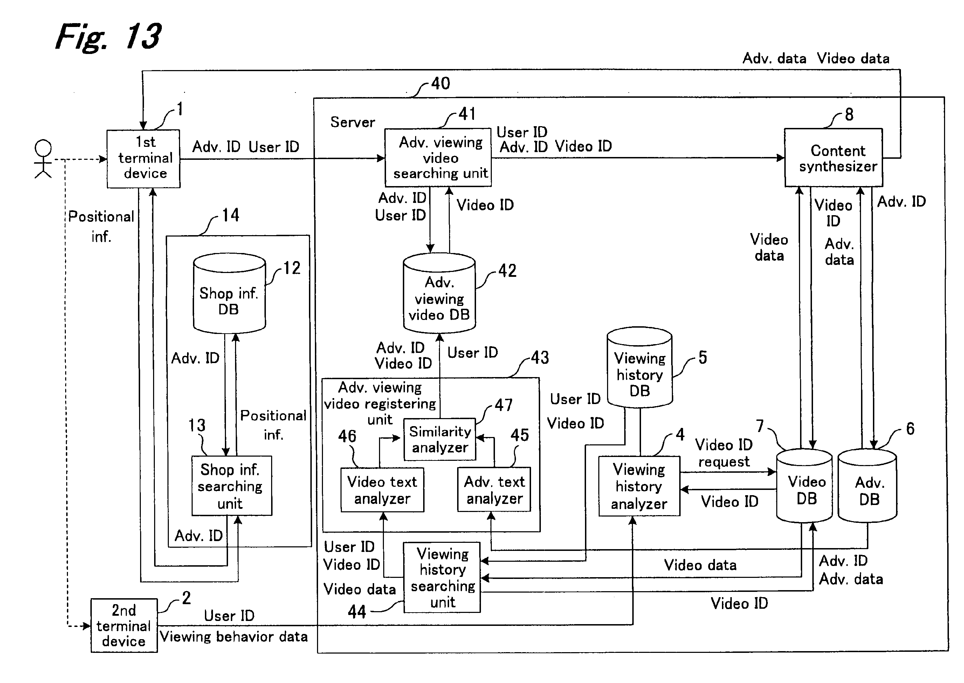

FIG.13 is a diagram showing a system configuration in the second embodiment of the present invention.
The advertisement distributing system in the present embodiment includes the first terminal device 1, the second terminal device 2 and a server 40. This system is different from the first embodiment in the configuration of the server 40.

Similarly to the first embodiment, the server 40 includes a viewing history analyzer 4, a viewing history DB 5, the content synthesizer 8, the advertisement DB 6 and the video DB 7. These function are the same as in the first embodiment. Further, the second embodiment is different in that an advertising viewing video searching unit 41, an advertising viewing video DB 42 and an advertising viewing video registering unit 43 are provided. Further, a viewing history searching unit 44 is provided in the same way as in the first embodiment, but its operation is different.
Further, there is the server 14 including the shop information searching unit 13 and the shop information DB 12. Similarly to the first embodiment, the function of this server 14 may be provided in the server 40.

Also, as shown in the above conceptual view, the server function does not need to be realized by a single server, but can be realized by a plurality of processing functions and DB functions connected by network. Further, the server may be one that is installed within the home such as a media server, or may be an external server. When the server is of a home use, it is necessary to update the advertisement data from external servers.

Alternatively, the function may be partially within the home and partially in external servers. In the case of the present embodiment, the video DB may be realized by, for example a home HDR so as to accumulate only the videos the user has played while the advertisement DB may be in an external server. The configuration described hereinbelow with reference to FIG. 13 is one form, and as long as these processing functions and DB functions are provided, it does not matter that these functions are either within or beyond the home or constructed of one device or multiple devices.

Further, part of the server function in FIG.13 may also be provided in the first terminal device 1. For example, the function etc. of the advertising viewing video DB 42 may also be provided in the first terminal device 1.

In the advertising video registering unit 17 of the first embodiment, matching between advertisement data and the entire video data in video DB 7 is carried so as to construct general-purpose advertising video DB 9 for everybody.
However, advertising viewing video registering unit 43 of the present embodiment is characterized by performing data matching targeting alone the video data which was determined by the viewing history analyzer 4 that the user viewed it with interest and constructing an advertising viewing video DB for a specified person.

In the system of the present embodiment constructed as above, the sequence for distributing advertisement and video to the first terminal device 1 will be described.

The process of the first terminal device 1 (e.g., mobile terminal) from acquisition of an advertisement ID to transmission of a content data acquisition request with the advertisement ID and the user ID to the server 40 is the same as the first embodiment.

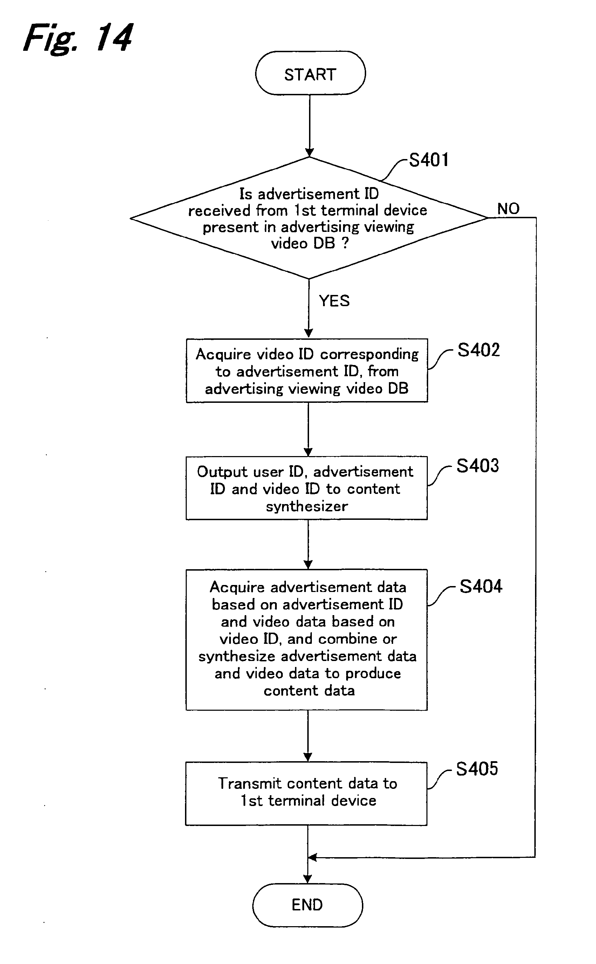

FIG.14 is a flow chart diagram showing the sequence of an advertisement distributing process in the server of the present embodiment.
In the server 40 that has received a content data acquisition request including the user ID and advertisement ID from the first terminal device 1, the advertisement ID and user ID are input to the advertising viewing video searching unit 41. The advertising viewing video searching process in the advertising viewing video searching unit 41 is a process which, based on the advertisement ID the user has received by means of the first terminal device 1, searches video suited to the content of the advertisement. In the advertising viewing video DB 42, the user ID, advertisement ID and video ID are combined and accumulated.

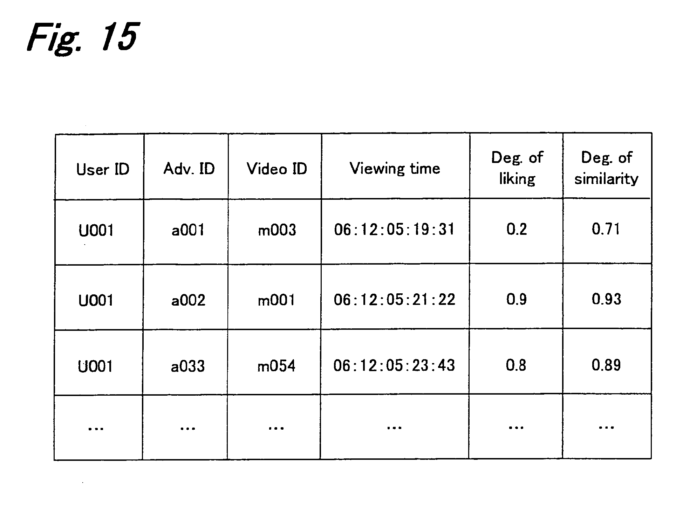

FIG.15 is a chart showing a table example of the advertising viewing video DB 42.
The video ID selected by the advertising viewing video registering unit 43 is accumulated in the advertising viewing video DB 42 in combination with the user ID and advertisement ID. Here, in the advertising viewing video DB 42, the video ID recorded in the viewing history DB 5 alone is accumulated. Alternatively, the watching time of the user, the degree of liking and the degree of similarity with advertisement may be calculated for each video and recorded, as shown in FIG. 15.
The process of the advertising viewing video registering unit 43 recording data into the advertising viewing video DB 42 will be described later.

As at S401 in FIG.14, the advertising viewing video searching unit 41 searches whether the advertisement ID received from the first terminal device 1 has been accumulated in the advertising viewing video DB 42. If the advertisement ID exists in the advertising viewing video DB 42 ('Yes' at S401), this indicates that the advertisement is suited to user's taste, and the operation goes to S402.

If the advertisement ID is not present in the advertising viewing video DB 42 ('NO' at S401), the advertisement is regarded to be other than user' s taste, the advertisement distributing process is ended, and a notice that indicates that there is no relevant advertisement information is transmitted to the first terminal device 1.

At S402, the advertising viewing video searching unit 41 acquires the video ID corresponding to advertisement ID from the advertising viewing video DB 42. At S403, the advertising viewing video searching unit 41 outputs the user ID, advertisement ID and video ID to the content synthesizer 8.

Here, similarly to the first embodiment, there is a possibility that the user receives a plurality of advertisement IDs at the same position. In this case, similarly to the first embodiment, the search may be done based on all the received advertisement IDs, or the best-suited advertisement may be selected or advertisements may be selected in the order of priority, taking into account the time etc. when the advertisement is distributed.

Further, in the present process, there is a possibility that a plurality of video IDs are found for a single video ID. In this case, the candidates are narrowed down to one by performing any one of the following processes, and the selected one is output to the content synthesizer.

1) Select the one of which the user' s degree of liking is highest.
That is, as shown in FIG.15, the degree of liking was previously calculated for each video ID by the viewing history analyzer 4 and has been recorded in the advertising viewing video DB 42, and based on this, the video ID having the highest degree of liking is selected.

2) Select the one which was viewed latest by the user.
That is, as shown in FIG.15, the time when video was viewed has been recorded for each video ID into the advertising viewing video DB 42, and based on this, the video ID of the latest time is selected.

3) Select the one of which the degree of freshness as to the date and time of broadcast of the program is high.
That is, based on the broadcast time in the video DB 7, the video ID of the latest time is selected.

4) Select the one of which the degree of similarity with the advertisement is greatest.
That is, based on the degree of similarity calculated by advertising viewing video registering unit 43 was recorded in advertising viewing video DB 42 as shown in FIG.15, and based on this, the video ID of which this degree of similarity is greatest.

5) Select one video ID by integrally processing the information described above 1) to 4).

Similarly to the first embodiment, the content synthesizing process is a process, which based on the advertisement ID and video ID, searches advertisement data and video data through the advertisement DB 6 and the video DB 7, respectively and combines the advertisement data and video data or synthesizes the data as a video-attached advertisement.
Here, the advertisement DB 6 and the video DB 7 are the same as those in the first embodiment.

First, at S404, the content synthesizer 8 searches advertisement data and video data having the related advertisement ID and video ID through the advertisement DB 6 and the video DB 7 and produces a video-attached advertisement.
Alternatively, the content synthesizer 8 may be adapted to temporarily store the data obtained from the search, instead of synthesizing the advertisement data and video data.

Next, at S405, the content synthesizer 8 transmits the synthesized content data or the advertisement data and video data before composition, to the first terminal device 1 so as to end the content distributing process in the server 40.
The subsequent display process of the content data in the first terminal device 1 is the same as that in the first embodiment.

As described heretofore, the DB when a video ID is acquired based on the advertisement ID is made to reflect user's taste, it is possible to distribute advertisement together with the video the user is interested in, whereby it is possible to encourage the user who viewed these to buy.

### (Advertising viewing video registering process)

The process for registering a user ID, advertisement ID and video ID into the advertising viewing video DB 42 will be described in detail.

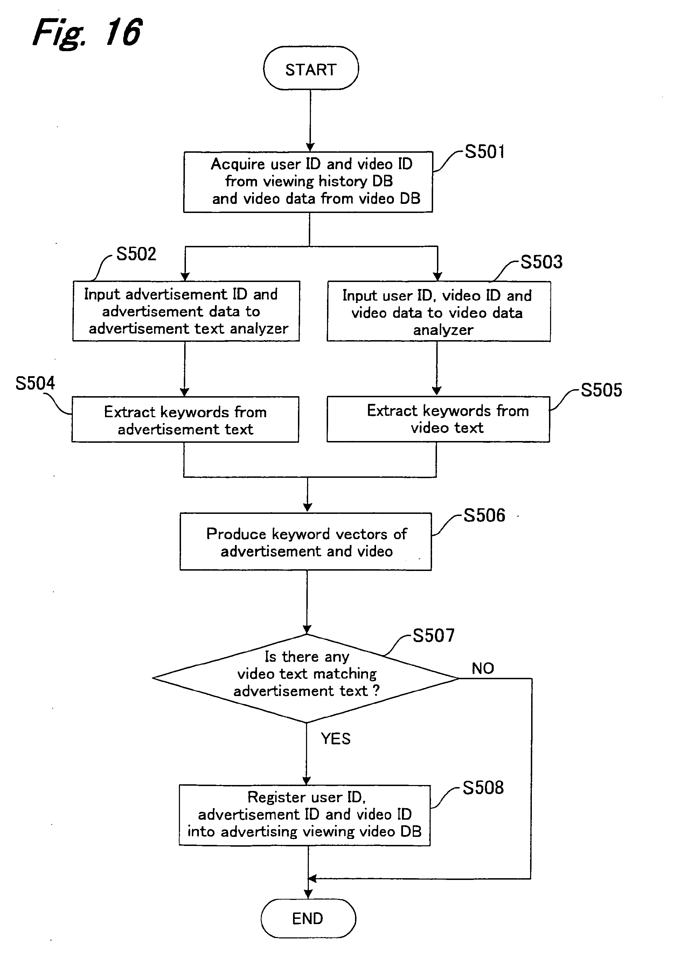

FIG.16 is a flow chart diagram showing the sequence of registering data into the advertising viewing video DB 42. Description will be made following the flow chart.
At S501, the viewing history searching unit 44 acquires an user ID and a video ID from the viewing history DB 5 and video data based on the video ID from the video DB 7.

As shown in FIG.13, the advertising viewing video registering unit 43 includes: an advertisement text analyzer 45 for analyzing the data from the advertisement DB 6; a video text analyzer 46 for analyzing the data from the video DB 7; and a similarity analyzer 47 for analyzing the degree of similarity between these advertisement text and video text.

At S502, an advertisement ID and advertisement data are input to the advertisement text analyzer 45. At S503, the viewing history searching unit 44 supplies the user ID, video ID and video data to the video text analyzer 46.

At S504 and S505, the advertisement text analyzer 45 and video text analyzer 46, similarly to the first embodiment, cut out text portions from the advertisement data and video data, respectively, and perform keyword extraction, and produce keyword vectors at S506.

At S507, the similarity analyzer 47, similarly to the first embodiment, performs a matching process for these. If no match is found in the matching process ('NO' at S507), this process is ended. If there is any match in the matching process ('YES' at S507), the similarity analyzer 47 registers the matched advertisement ID, video ID and user ID into the advertising viewing video DB 42. Here, if a plurality of videos have matched with one video ID, plural video IDs for one advertisement ID are registered in pairs in the advertising viewing video DB 42.

It is also possible to record the degree of liking (the degree to which the user likes a video), acquired from the viewing history DB 5 and the degree of similarity (the degree of similarity between advertisement text and video text), acquired from the similarity analyzer 47, as shown in FIG.15.

This process may be done either when the user ID and video ID are registered into the viewing history DB 5, or periodically.

By performing the process described above, video IDs that each user viewed with interest and advertisement IDs suited to these are accumulated in the advertising viewing video DB 42, hence video IDs acquired from this DB can reflect taste of the user.

Here, as described above, the advertising viewing video DB 42 in FIG.13 is a database that reflect personal viewing history. Accordingly, it is possible that the function of the advertising viewing video searching unit 41, the function of the advertising viewing video DB 42 and the like in FIG.13 are provided in the first terminal device 1.

In this case, similarly to embodiment 1, the shop information searching unit 13 of the server 14 that has received a user ID and positional information from the first terminal device 1 searches through the shop information DB 12 based on the positional information to acquire advertisement ID and transmits it the first terminal device 1.

The advertising viewing video searching unit 41 of the first terminal device 1 searches through the advertising viewing video DB 42 in the first terminal device 1 based on this advertisement ID and user ID to acquire an advertisement information list (text sentences such as a title etc.) and displays it on the display screen of the first terminal device 1 as shown in FIG.9A. (In this case, though not illustrated, the function of extracting the title portion from advertisement text or producing summary text and recording it with the advertisement ID into the advertising viewing video DB 42 is needed in the advertising viewing video registering unit 43 of the server 40.).

In FIG.9A, when the user selects a desired advertisement information number, the advertising viewing video searching unit 41 of the first terminal device 1 searches through the advertising viewing video DB 42 based on the ID of the selected advertisement to acquire the video ID corresponding to it and transmits it with the advertisement ID and user ID to the content synthesizer 8 of the server 40.

The content synthesizer 8, based on the advertisement ID and video ID, searches the advertisement data and video data from the advertisement DB 6 and the video DB 7 of the server 40, respectively and transmits them to the user.

### [The third embodiment]

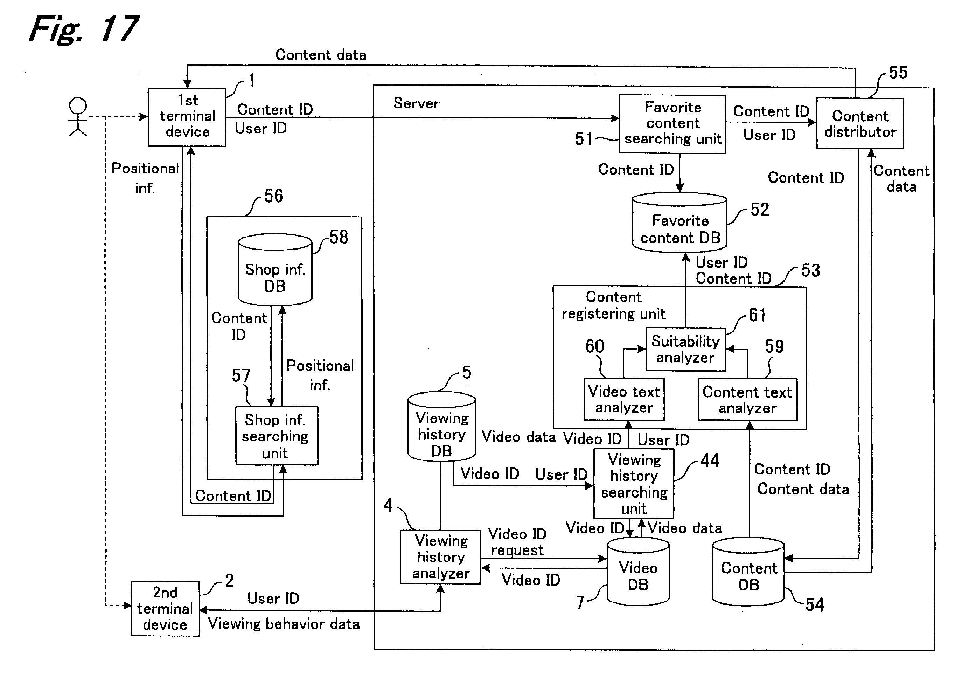

FIG.17 is a diagram showing a system configuration in the third embodiment of the present invention.
The advertisement distributing system in the present embodiment includes the first terminal device 1, the second terminal device 2 and a server 50. This system is different from the first embodiment in the configuration of the server 50.

Similarly to the first embodiment, the server 50 includes the viewing history analyzer 4, the viewing history DB 5 and the video DB 7. These function are the same as in the first embodiment. Further, the third embodiment is different in that the server includes a favorite content searching unit 51, a favorite content DB 52, a content registering unit 53, a content DB 54 and a content distributor 55. The viewing history searching unit 44 is the same as in the second embodiment.

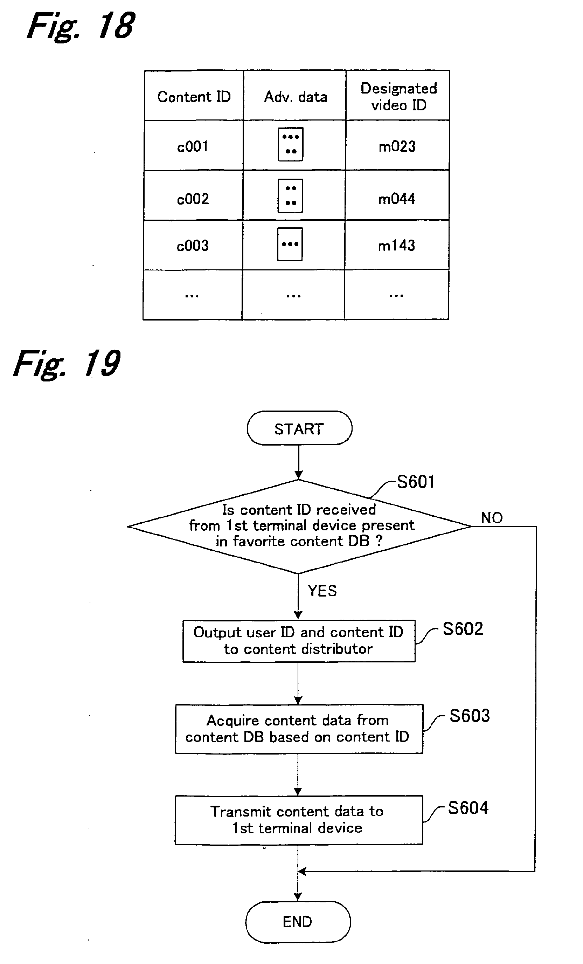

FIG.18 is a chart showing a table example of content DB 54.
It should be understood that content data indicates video-attached advertisement including an advertising video designated beforehand by an advertisement agency or the like, and the content DB 54 has content IDs, advertisement data and designated video IDs accumulated therein as shown in FIG.18.

Also, as shown in the above conceptual view, the server function does not need to be realized by a single server, but can be realized by a plurality of processing functions and DB functions connected by network. Further, the server may be one that is installed within the home such as a media server, or may be an external server. When the server is of a home use, it is necessary to update the content data in the content DB from external servers.

Alternatively, the function may be partially within the home and partially in external servers. For example, the functions of the content DB 54 and the content distributor 55 may be provided by an external server. The configuration described hereinbelow with reference to FIG.17 is one form, and as long as these processing functions and DB functions are provided, it does not matter that these functions are either within or beyond the home or constructed of one device or multiple devices.

Further, part of the server function in FIG.17 may also be provided in the first terminal device 1. For example, the function etc. of the favorite content DB 52 may also be provided in the first terminal device 1.

The present embodiment corresponds to the case where advertisement data to be distributed by an advertiser (shops and products) and video that is suited to the advertisement is prepared in advance as content data by an advertisement agency or the like. That is, it is possible to distribute advertisement to a person who viewed a particular video. In this case, though not illustrated, whether the ID of the video (designated video) designated beforehand by an advertisement agency or the like is present in the user's viewing history DB is checked, and if there is, the content data is regarded as one that is suited to taste of the user and hence distributed to the user. At this time, an advertisement may be distributed together with the designated video, or the advertisement alone may be distributed.

However, it is very rare that a specially designated video has been viewed among an enormous amount of video data. Hence, if no content data is distributed unless the designated video has been viewed, it is not desirable for both the advertiser and the user. To deal with this, the present embodiment is **characterized in that** if the degree of suitability between the content text (advertisement text) of content data and the text of the video which the user has viewed with interest is high, the content data is regarded as being suited to user's taste so that the content data is distributed. Alternatively, it is possible to arrange such that when the degree of similarity between the text of the designated video and the text of video the user viewed with interest is high, the content data is regarded as being suited to user's taste so that the content data is distributed.

The present embodiment will be described taking as an example the former, that is, the case in which if the degree of similarity between the content text (advertisement text) of content data and the text of the video which the user has viewed with interest is high, the content data is regarded as being suited to user' s taste so that the content data (the advertisement and the video designated by the advertisement agent or the like) is distributed.

In the system of the present embodiment constructed as above, the sequence for distributing content data to first terminal device 1 will be described.

To begin with, the user operates keys in the first terminal device 1, e.g., a mobile terminal or the like, to input for selection of a shop search menu through input unit 9. The controller 23 of the first terminal device 1 transmits a control signal for acquisition of the position to the positional information acquisitor 22. The positional information acquisitor 22 acquires the positional information of the first terminal device 1 from the GPS or the like, via the controller 23 and the communicator 18.

Alternatively, the first terminal device 1 may periodically acquire positional information and automatically display the menu for acquiring shop information on the standby screen of the first mobile terminal device 1.

Further, the controller 23 sends a content ID acquisition request together with the positional information acquired by positional information acquisitor 22 to a server 56 via communicator 18.

The server 56 includes a shop information searching unit 57 and a shop information DB 58.

The shop information searching unit 57 of the server 56 that has received the positional information from the first terminal device 1 searches through the shop information DB 58 based on the information. In the shop information DB 58, positional information is related with a content ID and stored. The content ID is an ID that is assigned uniquely to a content in which an advertisement is synthesized with a video that has been prepared beforehand by an advertisement agency or the like. That is, the ID of the content for advertising a shop, product or the like, found around the position is related and stored in accordance with the position of the first terminal device 1. The shop information searching unit 57 searches through the shop information DB 58 based on the positional information, acquires the content ID and transmits it to the first terminal device 1.

Herein, content IDs are assumed to be acquired based on the positional information of the mobile terminal but content IDs may be acquired based on the RFID (Radio Frequency Identification) tags and the like, attached to shops, products, etc., by a mobile terminal 1 or the like.

It is also possible to make the first terminal device 1 automatically receive content IDs for advertising shops and products from the shops and products found nearby in accordance with the position of the user.

The controller 23 of the first terminal device 1 having received a content ID from the server 56 through the communicator 18, transmits a content data acquisition request with the user ID and content ID to the server 50.

FIG.19 is a flow chart diagram showing the sequence of an advertisement distributing process in the server 50 in the present embodiment.
In the server 50 that has received a content data acquisition request including the user ID and advertisement ID from the first terminal device 1, the content ID and user ID are input to favorite content searching unit 51. The favorite content searching process in the favorite content searching unit 51 is a process which, based on the content ID the user has received by means of the first terminal device 1, searches through the favorite content DB 52. In favorite content DB 52, the user ID and content ID are accumulated in pair.

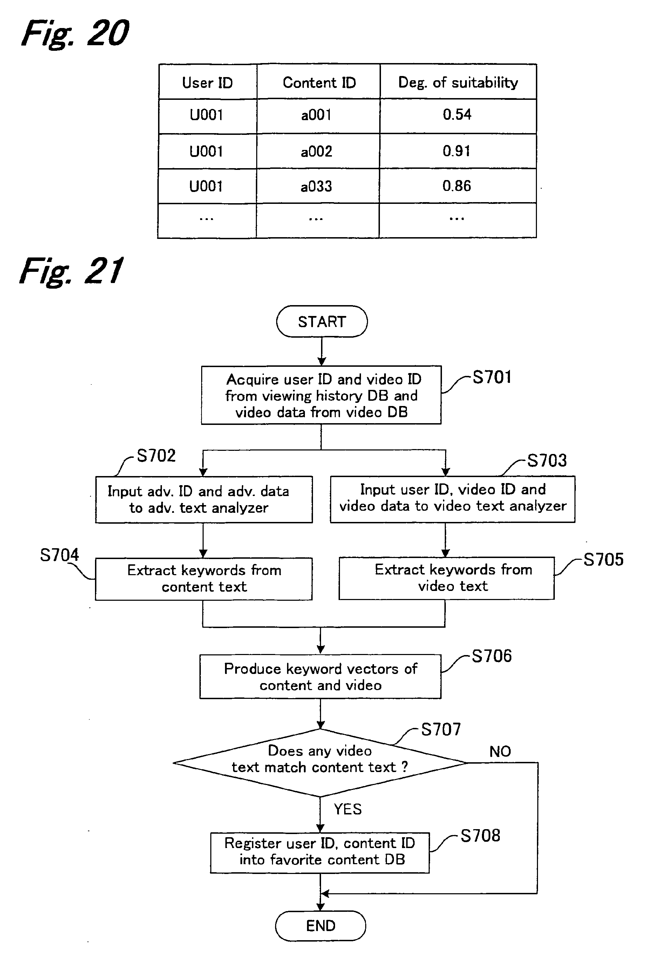

FIG.20 is a chart showing a table example of the favorite content DB 52.
The content ID selected by the content registering unit 53 is accumulated in the favorite content DB 52 in combination with the user ID. Further, the degree of suitability to the video the user has viewed may also be recorded, as shown in FIG.20.
The process of this content registering unit 53 recording data into the favorite content DB 52 will be described later.

As at S601 in FIG.19, the favorite content searching unit 51 searches whether the content ID received from first terminal device 1 is accumulated in favorite content DB 52. If the content ID exists in the favorite content DB 52 ('Yes' at S601), this indicates that the content is suited to user' s taste, and the operation goes to S602.

If the content ID is not present in the favorite content DB 52 ('NO' at S601), the content is regarded to be other than user's taste, the advertisement distributing process is ended, and a notice that indicates that there is no relevant content information is transmitted to first terminal device 1.

At S602, the favorite content searching unit 51 outputs the user ID and content ID to the content distributor 55.

Here, similarly to the first embodiment, there is a possibility that the user receives a plurality of content IDs at the same position and a plurality of content IDs are selected as a result of the search by the favorite content searching unit 51. In this case, all the content IDs may be sent to the content distributor 55 or the content with a higher degree of suitability may be given higher priority based on the degree of suitability in the favorite content DB 52. Alternatively, the best-suited content may be selected or the contents may be given priority, taking into account the time or the like (morning, day, night, weekday, weekend, season, etc.) when the content is distributed to the user. For example, it is possible to provide such a configuration that if the time zone when content IDs are received is lunchtime, food service-related contents alone may be selected or food service-related contents may be given higher priority.

Next, at S603, the content distributor 55, based on the content ID sent from the favorite content searching unit 51, searches content data through the content DB 54, and at S604, it transmit the content data to the first terminal device 1 so as to end the content distributing process in the server 50.
The subsequent display process of the content data in the first terminal device 1 may be made in the same manner as in the first embodiment. That is, the display screen of the first terminal device 1 may be divided into two areas so that the advertisement data is displayed in one area and the designated video data is displayed (played) in the other area.

Alternatively, the advertisement data alone may be displayed without displaying the video data. Also in this case, the present system can distribute advertisement suited to user's taste based on the viewing history of the user.

Alternatively, it is also possible to display the content data (advertisement data and designated video data) in the layout designed by the advertisement agency or the like without dividing the screen area of the first terminal device 1.

As described heretofore, in distributing content, a content is selected from those that have been registered in the favorite content DB based on user's taste, whereby it is possible to make the user view the content with interest and hence encourage the user to buy.

### (Content registering process)

The process for registering a user ID and content ID into the favorite content DB 52 will be described in detail.

FIG.21 is a flow chart diagram showing the sequence of registering data into the favorite content DB 52.
Description will be made following the flow chart.
At S701, the viewing history searching unit 44 acquires an user ID and a video ID from viewing history DB 5 and video data based on the video ID from the video DB 7.

As shown in FIG.17, the content registering unit 53 includes: a content text analyzer 59 for analyzing the data from the content DB 54; a video text analyzer 60 for analyzing the data from the video DB 7; and a suitability analyzer 61 for analyzing the degree of suitability between these content text and the video text.

At S702, a content ID and content data are input to the content text analyzer 59. At S703, the viewing history searching unit 44 supplies the user ID, video ID and video data to the video text analyzer 60.

At S704 and S705, the content text analyzer 59 and the video text analyzer 60, similarly to the first embodiment, cut out text portions from the content data and video data, respectively, and perform keyword extraction, and produce keyword vectors at S706.

At S707, the suitability analyzer 61, similarly to the first embodiment, performs a matching process for these. If no match is found in the matching process (`NO' at S707), the content is regarded as being not suited to user' s interest, and this process is ended. If there is any match in the matching process ('YES' at S707), the content is determined as being suited to user's interest, and the suitability analyzer 61 registers the matched content ID and user ID into the favorite content DB 52. Here, if a plurality of videos have matched with one content ID, the degree of suitability with the content ID may be increased.

It is also possible to acquire the degree of suitability from the suitability analyzer 61 (the degree of similarity between the advertisement text and the video text) and record it into the favorite content DB 52 as shown in FIG.20. Alternatively, the degree of suitability may be determined from the degree of liking when the user viewed the video and the similarity between the video and the content text. That is, the higher the degree of similarity between the video the user viewed with interest and the content text, the higher the degree of suitability of the content to the user becomes.

This process may be done either when the user ID and video ID are registered into the viewing history DB 5, or periodically.

By performing the process described above, content IDs that match the videos each user viewed with interest (viewing history) can be accumulated into the favorite content DB 52.

It should be noted that the advertisement distributing system, advertisement distributing server, and advertisement distributing method, program and recording medium of the present invention are note limited to the above illustrated examples, but it is apparatus that various changes can be added within departing from the sprite and scope of the invention.

As has been described, according to the present invention, since based on an advertisement ID, video data corresponding to the advertisement ID is extracted so that the advertisement data and the video data are distributed to a terminal device, the program video scene most suited to the advertisement distributed by the advertiser can be selected and distributed together with it. It is hence possible to make the user watch the advertisement with video and encourage the user to buy.

## Claims

1. An advertisement distributing system for distributing advertisement from a server to a terminal device, **characterized in that**
a storage is searched through based on data that specifies an advertisement so as to determine whether there is any video data corresponding to the advertisement data, and if video data corresponding to the advertisement data is found, the server distributes the advertisement data to the terminal device.

2. An advertisement distributing system for distributing advertisement from a server to a terminal device, **characterized in that**
a storage that reflects user's taste is searched through based on data that identifies an advertisement so as to determine whether there is any video data corresponding to the advertisement data, and if video data corresponding to the advertisement data is found, the server distributes the advertisement data to the terminal device.

3. An advertisement distributing system for distributing advertisement from a server to a terminal device, **characterized in that**
a storage that reflects user's taste is searched through based on data that identifies an advertisement so as to determine whether there is any video data corresponding to the advertisement data, and if video data corresponding to the advertisement data is found, the server distributes the advertisement data and the video data to the terminal device.

4. An advertisement distributing system for distributing advertisement from a server to a terminal device, **characterized in that**
a storage that reflects user's taste is searched through based on data that identifies a content including advertisement, and when the data that identifies the content is found in the storage, the server distributes content data to the terminal device.

5. An advertisement distributing server for distributing advertisement to a terminal device, comprising:
an advertising video storage for managing pairs of advertisement data and video data;
an advertising video searching portion which, based on the data identifying an advertisement received from the terminal device, searches through the advertising video storage whether there is any video data corresponding to the advertisement data, reflecting the user's viewing history; and
a content synthesizer for combining the advertisement data and the video data when video data corresponding to the advertisement data is found,
wherein the advertisement data and the video data are distributed to the terminal device.

6. The advertisement distributing server according to Claim 5, further comprising an advertising video registering portion for selecting the video data suited to the advertisement data,
wherein the advertising video storage stores the pair of the advertisement ID which identifies the advertisement data and the video ID which identifies the video data.

7. The advertisement distributing server according to Claim 6, wherein the advertising video searching portion, based on the advertisement ID received from the terminal device, searches whether the video ID that corresponds to the advertisement ID is present in the advertising video storage, and outputs, if the corresponding video ID is found, the advertisement ID and the video ID to the content synthesizer, and the content synthesizer identifies advertisement data and video data based on the advertisement ID and the video ID.

8. The advertisement distributing server according to Claim 7, wherein the advertising video registering portion compares text information contained in the advertisement data and text information contained in the video data to select the video data suited to the advertisement data.

9. The advertisement distributing server according to Claim 8, further comprising:
a viewing history storage for managing video IDs of video data that reflects user's taste; and
a viewing history searching portion for searching whether the video ID extracted from the advertising video storage has been stored in the viewing history storage,
wherein when the corresponding video ID is found in the viewing history storage, the video ID and the advertisement ID corresponding to the video ID are output to the content synthesizer.

10. The advertisement distributing server according to Claim 8, wherein the advertising video storage manages a combination of a user ID, an advertisement ID reflecting user's taste and a video ID.

11. An advertisement distributing server for distributing advertisement to a terminal device, comprising:
a content storage for storing content data of advertisement data synthesized with video data;
a favorite content storage for managing a combination of a user ID and a content ID that identifies the content data suited to user's taste;
a favorite content searching portion for searching whether a content ID received from the terminal device is present in the favorite content storage; and,
a content distributor which acquires content data from the content storage and distributes the content data to the terminal device.

12. The advertisement distributing server according to Claim 11, further comprising a viewing history analyzer for determining whether video data is suited to user's taste based on the viewing behavior data of the user, wherein the determination result is reflected on the combination of the advertisement data and the video data or selection of content data.

13. The advertisement distributing server according to Claims 5 wherein, when the advertisement data is suited to a plurality of video data, the plurality of video data includes the video data having the greatest degree of similarity with the advertisement, the video data having the highest degree of user's liking, the video data in which the viewing time of the user or the program broadcast date is the latest, and the video data that agrees with the setting suited to the time when the advertisement is distributed.

14. An advertisement distributing method for distributing advertisement from a server to a terminal device, comprising the steps of:
searching through a storage that reflects user's taste based on data that identifies an advertisement;
determining whether there is any video data corresponding to the advertisement data; and
distributing the advertisement data from the server to the terminal device when video data corresponding to the advertisement data has been found.

15. An advertisement distributing method for distributing advertisement from a server to a terminal device, comprising the steps of:
searching through a storage that reflects user's taste based on data that identifies an advertisement;
determining whether there is any video data corresponding to the advertisement data; and,
distributing the advertisement data and the video data from the server to the terminal device when video data corresponding to the advertisement data has been found.

16. An advertisement distributing method for distributing advertisement from a server to a terminal device, comprising the steps of:
searching through a storage that reflects user's taste based on data that identifies a content containing advertisement; and,
distributing content data from the server to the terminal device when data that identifies the content has been found in the storage.

17. A program that makes a computer execute an advertisement distributing method according to one of Claims 14 through 16.

18. A recording medium that is recorded with the program according to Claim 17 so as to be reasonable by a computer.
